# EUROPEAN PATENT APPLICATION

(11) **EP 2 752 807 A1**
(43) Date of publication of application: **09.07.2014**
(21) Application number: 11871438.5
(22) Date of filing: 30.08.2011
(51) Int. Cl.: G06Q 50/00, A01G 7/00

(54) **IMAGING DEVICE, IMAGING SUPPORT PROGRAM, INFORMATION PROVISION METHOD, AND INFORMATION PROVISION PROGRAM**

(71) Applicant: Fujitsu Limited, Kawasaki-shi, Kanagawa 211-8588 (JP)
(72) Inventor: IBAMOTO, Takehiko, Kawasaki-shi Kanagawa 211-8588 (JP)
(74) Representative: HOFFMANN EITLE
(86) International application number: PCT/JP2011/069667
(87) International publication number: WO 2013/030965

(57) **Abstract**

A photographing apparatus (101) transmits to an information providing apparatus (102), apparatus information (140) identifying the photographing apparatus. Based on the apparatus information (140) from the photographing apparatus (101), the information providing apparatus (102) extracts from a composition DB (130), a composition image corresponding to a type of a given crop to be photographed by the photographing apparatus (101). The information providing apparatus (102) transmits to the photographing apparatus (101), the composition image (150) extracted from the composition DB (130). The photographing apparatus (101) displays on a display (110), the composition image (150) acquired from the information providing apparatus (102) together with an object.

## Description

### TECHNICAL FIELD

The present invention relates to a photographing apparatus, a photographing support program, an information providing method, and information providing program that support photographing.

### BACKGROUND ART

A photograph of a crop is conventionally used as material for comprehending the growth state of the crop cultivated in a farm field. For example, a manager of a large-scale farm understands the growth state of a crop from a photograph taken by an employee in the field and thereby, determines a suitable measure for the growth state of the crop.

Related technology includes a technique of supporting photographing to record a construction as photographs. For example, according to one such technique, various types of memory store a map in which a photographing number is added to each photographing location, a photographing instruction for each photographing number, and a photograph heading for each photographing number to display a map based on an input map calling signal as well as a photographing instruction or a photograph heading based on a photographing number (see, e.g., Patent Document 1).

According to another technique, one composition among multiple preset compositions in photographing is selected. For example, a memory stores a preset composition for photographing correlated with a selection key such that when the selection key is pushed, a composition corresponding to the pushed selection key is selected and displayed on a display unit (see, e.g., Patent Document 2).
Patent Document 1: Japanese Laid-Open Patent Publication No. H6-194738
Patent Document 2: Japanese Laid-Open Patent Publication No. H11-24153

### DISCLOSURE OF INVENTION

### PROBLEM TO BE SOLVED BY THE INVENTION

However, the conventional techniques have a problem in that when a farm crop cultivated in a farm field is photographed, a photographer does not know what is important for photographing and consequently, a photograph that is not suitable as a material for understanding the growth state of the farm crop.

For example, even in the same farm field, the location to be photographed at the time of photographing may differ depending on the type (e.g., an item, a variety, and a cropping type) of the crop being cultivated. Therefore, a less skilled worker cannot determine which part of the farm crop should be considered important for photographing, making it difficult to take a suitable photograph to be used as material for understanding the growth state of the farm crop.

To solve the problems associated with the conventional techniques, an object of the present invention is to provide a photographing apparatus, photographing support program, an information providing method, and information providing program that support the photographing of crops.

### MEANS FOR SOLVING PROBLEM

To solve the problems above and achieve an object, according to one aspect of the present invention, a photographing apparatus and a photographing support program are proposed acquire from a storage unit that stores information that indicates a photographed image composition for photographing a crop, information that indicates a composition determined based on information related to a farm field. The storage unit stores multiple records of the information for the crop; and the photographing apparatus and the photographing support program further display on a display unit, the acquired information that indicates the composition.

To solve the problems above and achieve an object, according one aspect of the present invention, an information providing method and an information providing program are proposed that involves receiving from a photographing apparatus, information capable of identifying a farm field that is to be photographed; extracting from a storage unit that stores information that indicates a photographed image composition for photographing a crop, information that indicates a composition, where the information is extracted based on the farm field that is identified based on the received information, and the storage unit stores multiple records of the information for the crop; and the information providing method and the information providing program further involve transmitting to the photographing apparatus, the extracted information that indicates the composition.

### EFFECT OF THE INVENTION

According to one aspect of the present invention, the photographing of a crop can be supported.

### BRIEF DESCRIPTION OF DRAWINGS

FIG. 1 is an explanatory view of an example of a photographing support method according to a first embodiment;
FIG. 2 is an explanatory view of a system configuration example of a photographing support system 200 according to the first embodiment;
FIG. 3 is a block diagram of a hardware configuration example of a photographing apparatus 101;
FIG. 4 is a block diagram of an example of a hardware configuration of an information providing apparatus 102;
FIG. 5 is an explanatory view of an example of the contents of a composition DB 130;
FIG. 6 is an explanatory view of an example of the contents of a farm field DB 220;
FIG. 7 is an explanatory view of an example of the contents of a photographed image DB 230;
FIG. 8 is a block diagram of a functional configuration of the photographing apparatus 101 according to the first embodiment;
FIG. 9 is an explanatory view (part one) of a screen example of a finder screen FS;
FIG. 10 is an explanatory view (part two) of a screen example of the finder screen FS;
FIG. 11 is an explanatory view (part three) of a screen example of the finder screen FS;
FIG. 12 is an explanatory view (part four) of a screen example of the finder screen FS;
FIG. 13 is a block diagram of a functional configuration of the information providing apparatus 102 according to the first embodiment;
FIG. 14 is an explanatory view of a specific example of work schedule information;
FIG. 15 is an explanatory view of a screen example of a patrolling result list screen 1500;
FIG. 16 is a flowchart (part one) of an example of a photographing support process procedure of the photographing apparatus 101 according to the first embodiment;
FIG. 17 is a flowchart (part two) of an example of the photographing support process procedure of the photographing apparatus 101 according to the first embodiment;
FIG. 18 is a flowchart of an example of an information providing process procedure of the information providing apparatus 102 according to the first embodiment;
FIG. 19 is a flowchart of an example of a specific process procedure of a composition information extracting process;
FIG. 20 is a block diagram of a functional configuration of the photographing apparatus 101 according to a second embodiment; and
FIG. 21 is a flowchart of an example of the photographing support process procedure of the photographing apparatus 101 according to the second embodiment.

### BEST MODE(S) FOR CARRYING OUT THE INVENTION

Embodiments of a photographing apparatus, a photographing support program, an information providing method, and an information providing program will be described in detail with reference to the accompanying drawings.

### (First Embodiment)

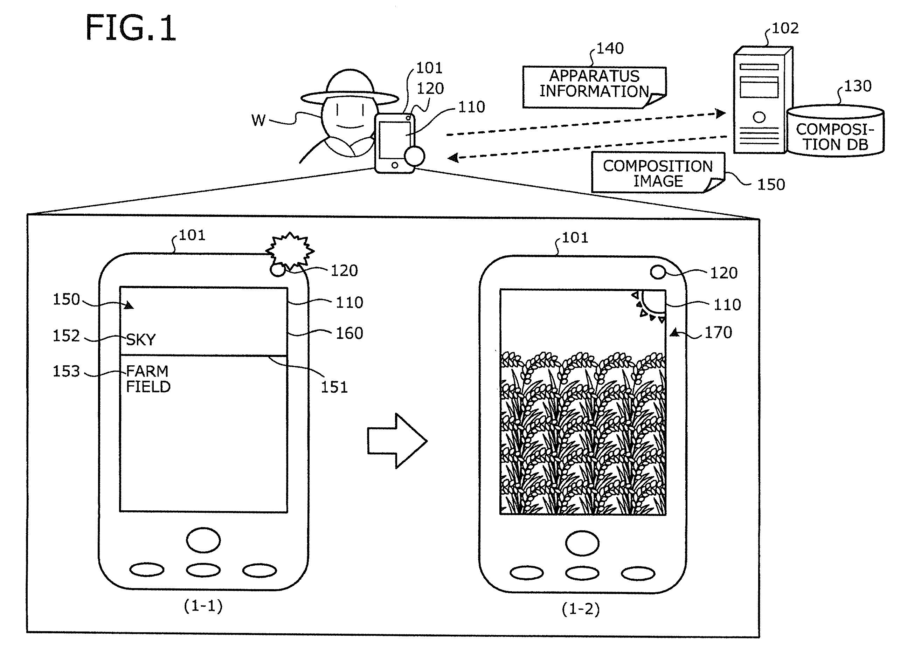

FIG. 1 is an explanatory view of an example of a photographing support method according to a first embodiment. In FIG. 1, a photographing apparatus 101 has a display 110 and a camera 120. The display 110 operates as a screen output unit of the photographing apparatus 101 and as a finder screen of the camera 120. The display 110 displays an object. The camera 120 photographs the object displayed on the display 110.

The worker W is a person engaged in farm work. The worker W photographs crops cultivated in farm fields as a part of the farm work. The farm fields are fields, vegetable gardens, etc., for cultivating and growing crops. The crops are crops such as grains and vegetables grown in fields and the like, for example.

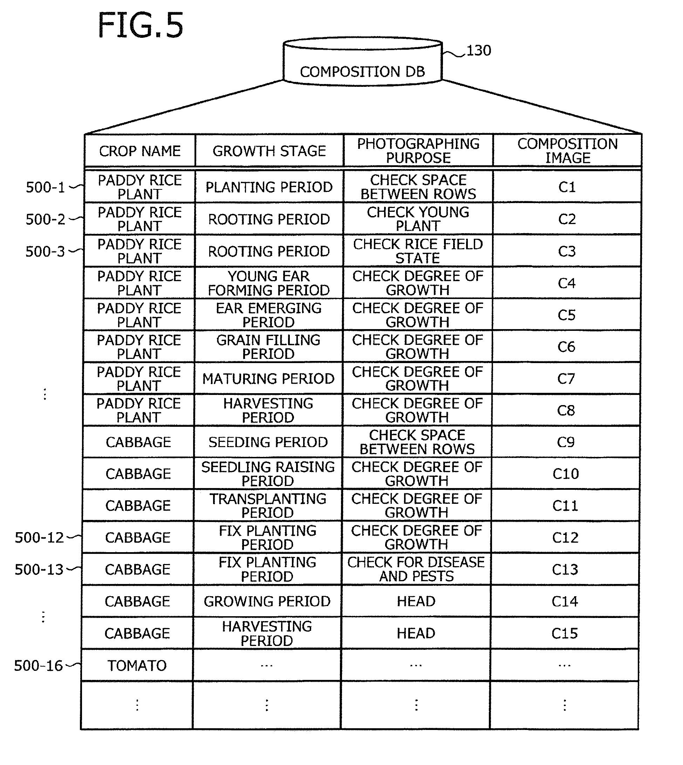

An information providing apparatus 102 is a computer that has a composition database (DB) 130 and provides composition images to the photographing apparatus 101. The composition DB 130 is a database storing for each crop type, a composition image that represents a photographed image composition to be used when photographing a crop. Crop types are categorized by item, variety, cropping type, etc. Further, composition is a structure of a photographed image taken for an intended purpose. The contents of the composition DB 130 will be described with reference to FIG. 5.

In this embodiment, at the time of photographing a given crop to be photographed, a composition suitable for the type of the given crop is displayed along with the object on a finder screen of the camera 120. As a result, the photographer can easily determine what should be considered important for photographing so that a photograph facilitating the comprehension of the growth state of the crop can be taken. The finder screen is a screen (or a viewfinder window) used for determining the photographing range and composition of a photographed image, and for focusing.

An example of the photographing support method according to the first embodiment will be described. In the description of the example, a "paddy rice plant" cultivated in a farm field is photographed as a given crop to be photographed.
(1) The photographing apparatus 101 transmits apparatus information 140 identifying itself to the information providing apparatus 102. The apparatus information 140 is information that includes at least one among an apparatus ID (identification) of the photographing apparatus 101, a worker ID of the worker W, and positional information of the photographing apparatus 101, for example.
(2) The information providing apparatus 102 extracts a composition image corresponding to the type of the given crop to be photographed by the photographing apparatus 101, from the composition DB 130 and based on the apparatus information 140 from the photographing apparatus 101. The type of the given crop is identified from, for example, the apparatus ID, the worker ID, and the positional information of the photographing apparatus 101 included in the apparatus information 140.
(3) The information providing apparatus 102 transmits to the photographing apparatus 101, a composition image 150 extracted from the composition DB 130. The composition image 150 is image information that represents a photographed image composition when the given crop is to be photographed and corresponds to the type of the given crop.
(4) The photographing apparatus 101 displays the composition image 150 acquired from the information providing apparatus 102 along with the object on the display 110. For example, the photographing apparatus 101 displays the composition image 150 along with the object on the finder screen of the camera 120, displayed on the display 110.

In an example depicted in (1-1) of FIG. 1, as a result of the activation of the camera 120 of the photographing apparatus 101, the composition image 150 is displayed on a finder screen 160 on the display 110. The composition screen 150 is image information that includes a line segment 151, text 152, and text 153. Although the object and the composition image 150 are superimposed and displayed on the finder screen 160, the object is not displayed in the drawing.

The line segment 151 is a line horizontally dividing the finder screen 160 in two. The text 152 represents an object (in this example, "sky") to be captured in an upper area among the areas obtained by dividing the finder screen 160 in two. The text 153 represents an object (in this example, "farm field") to be captured in the lower area among the areas obtained by dividing the finder screen 160 in two.

With the composition image 150, when photographing "paddy rice plants" cultivated in a farm field, the worker W can recognize that the "sky" may be captured in the upper area among the areas obtained by dividing the finder screen 160 in two and that the "farm field" may be captured in the lower area. Therefore, the worker W understands that the "paddy rice plants" may be photographed with attention focused on the entire farm field.

In the example depicted in (1-2) of FIG. 1, the "paddy rice plants" to be photographed are photographed and a photographed image 170 is consequently displayed on the display 110. The photographed image 170 has a composition with the sky imaged as a background on the upper side and the paddy rice plants of the entire farm field on the lower side. The photographed image 170 enables an overall understanding of the growth state of the paddy rice plants cultivated in the farm field.

With the photographing support method according to the first embodiment described above, when a given crop to be photographed is photographed, a composition image representative of a photographed image composition corresponding to the type of the given crop can be displayed on the finder screen. As a result, when photographing the given crop, the worker W can easily determine what composition should be used and what should be considered important for photographing, based on the composition image displayed on the finder screen. By performing the photographing according to the composition specific to the type of the given crop, a photographed image can be acquired that facilitates an understanding of the growth state of the given crop.

For example, it is assumed that a successful past case of favorable crop cultivation is displayed along with pictures of the crops currently under cultivation in a farm field as a list in attempting to make a comparison. In this case, if portions to be compared between the crops in the both farm fields are imaged at inconsistent positions, are unclearly imaged, or are not imaged, the user hardly can perform the comparison work utilizing the listed photographs. In the images photographed with the photographing support method according to the first embodiment, a portion of interest for comprehending the growth state is clearly photographed and imaged at substantially the same position in each photograph. Therefore, this photographing support method can enhance the availability of photographed images.

### (System Configuration Example of Photographing Support System 200)

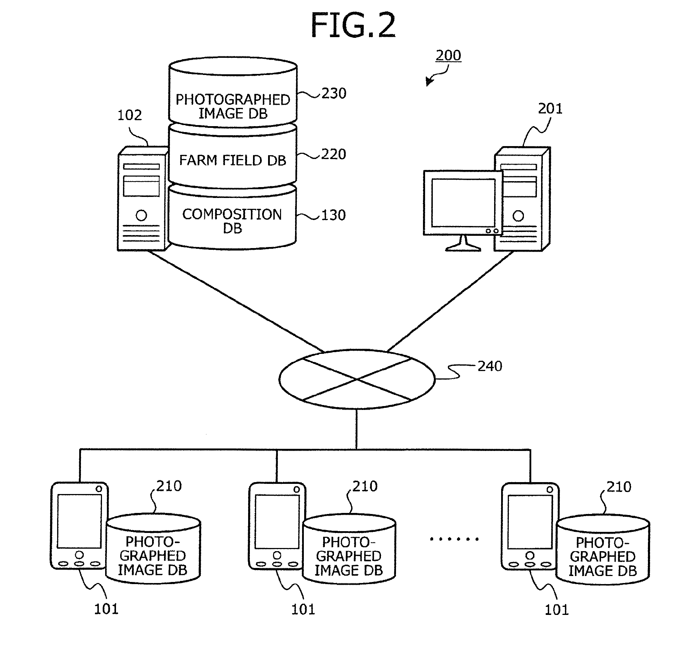

A system configuration example of a photographing support system 200 according to the first embodiment will be described. FIG. 2 is an explanatory view of the system configuration example of the photographing support system 200 according to the first embodiment. In FIG. 2, the photographing support system 200 includes multiple photographing apparatuses 101 (3 apparatuses are depicted in the figure), the information providing apparatus 102, and a client apparatus 201.

The photographing support system 200 has the photographing apparatuses 101, the information providing apparatus 102, and the client apparatus 201 connected through a wired or wireless network 240. The network 240 is a local area network (LAN) or a wide area network (WAN), for example.

The photographing apparatuses 101 are portable computers having photographed image DBs 210 and are used by respective workers W engaged in farm work. The photographing apparatuses 101 suffice to have an imaging function, a communicating function, and a display function. The photographing apparatuses 101 are applicable to digital cameras, mobile telephones, personal digital assistants (PDAs), and smartphones, for example.

The information providing apparatus 102 is a computer that has the composition DB 130, a farm field DB 220, and a photographed image DB 230 and provides composition images to the photographing apparatuses 101 used by the respective workers W. The information providing apparatus 102 can centrally manage photographed images taken by the photographing apparatuses 101 used by the respective workers W.

The information providing apparatus 102 is applicable to a server included in a cloud computing system and a personal computer (PC) or a notebook PC used by a manager of a large-scale farm, for example. The contents of the various DBs 120, 220, and 230 will be described later with reference to FIGs. 5 to 7.

The client apparatus 201 is a computer having a function of accessing the information providing apparatus 102 and browsing the photographed images stored in the photographed image DB 230. The client apparatus 201 is a PC and a notebook PC used by a manager and employees of a farm, etc.

### (Hardware Configuration Example of the Photographing Apparatus 101)

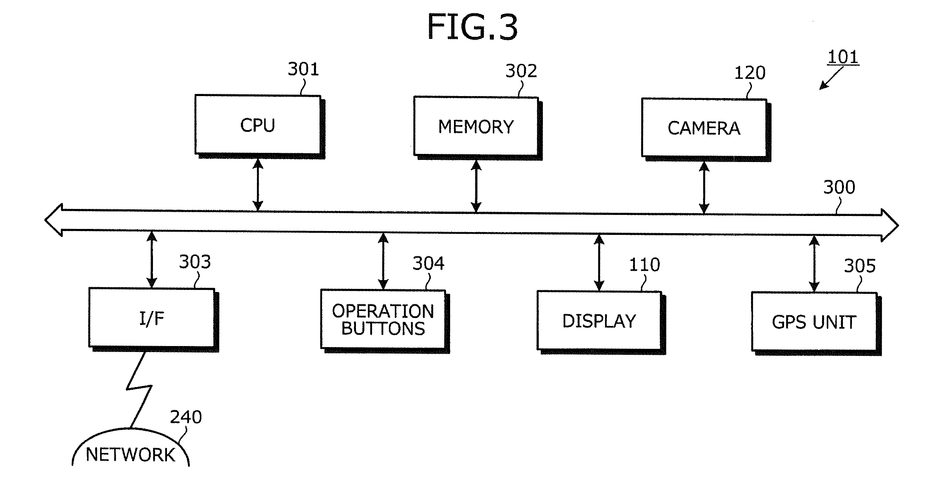

FIG. 3 is a block diagram of a hardware configuration example of the photographing apparatus 101. As depicted in FIG. 3, the photographing apparatus 101 includes a central processing unit (CPU) 301, memory 302, an interface (I/F) 303, operation buttons 304, a global positioning system (GPS) unit 305, the display 110, and the camera 120, respectively connected by a bus 300.

The CPU 301 governs overall control of the photographing apparatus 101. The memory 302 includes read-only memory (ROM), random access memory (RAM), flash ROM, and the like. ROM and flash ROM, for example, store various types of programs. RAM is used as a work area of the CPU 301.

The I/F 303 is connected to the network 240 via a communication line, and is connected to other apparatuses such as the information providing apparatus 102 and the client apparatus 201 through the network 240. The I/F 303 administers an internal interface with the network 240, and controls the input and output of data with respect to external apparatuses.

The operation buttons 304 perform data input. The operation buttons 304 may be provided as keys for inputting text, numerals, various instructions, and the like, and further may be provided as a touch-panel-type input pad or numeric keypad, etc.

The GPS unit 305 receives signals from GPS satellites and outputs position information of the photographing apparatus 101. Position information of the photographing apparatus 101 is, for example, information that identifies a single point on earth such as by latitude and longitude. Further, the photographing apparatus 101 may correct the position information output from the GPS unit 305, by a differential GPS (DGPS) scheme.

The display 110 displays, for example, data such as text, images, functional information, etc., in addition to a cursor, icons, and/or tool boxes. The display 110 may include a touch-panel-type input pad or numeric keypad as the operation buttons 304. A liquid crystal display (LCD) may be adopted as the display 110.

The camera 120 takes still photographs and moving pictures, and outputs each as image data. Images captured by the camera 120, for example, are stored to the memory 302 as image data. The camera 120 may be an infrared camera that enables photographing at night. In addition to the above components, the photographing apparatus 101 may further include various sensors such as a gyroscope, a three-axis accelerometer, and the like.

### (Hardware Configuration Example of the Information Providing Apparatus 102 Etc.)

A hardware configuration example of the information providing apparatus 102 and the client apparatus 201 (hereinafter, simply "information providing apparatus 102 etc.") depicted in FIG. 2 will be described.

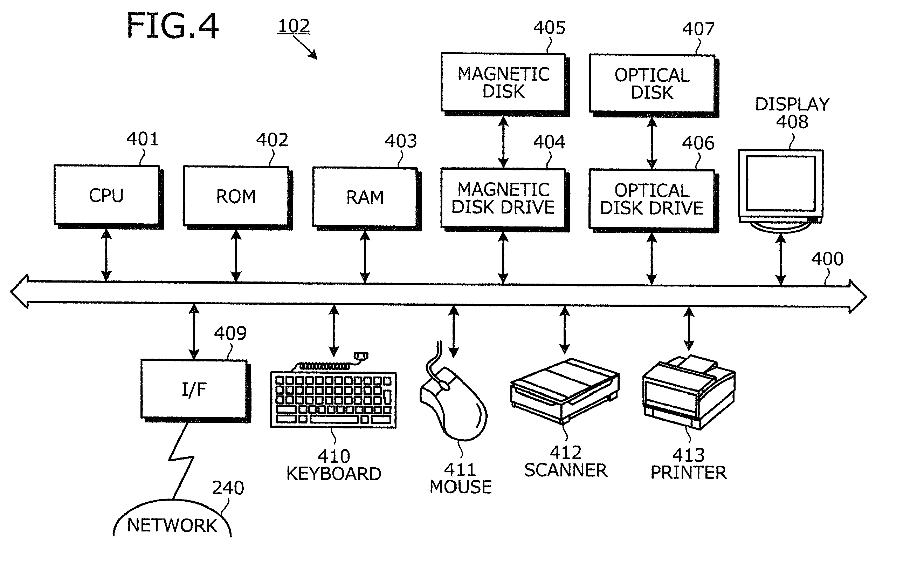

FIG. 4 is a block diagram of an example of a hardware configuration of the information providing apparatus 102. In FIG. 4, the information providing apparatus 102 includes a central processing unit (CPU) 401, read-only memory (ROM) 402, random access memory (RAM) 403, a magnetic disk drive 404, a magnetic disk 405, an optical disk drive 406, an optical disk 407, a display 408, an interface (I/F) 409, a keyboard 410, a mouse 411, a scanner 412, and a printer 413, respectively connected by a bus 400.

The CPU 401 governs overall control of the information providing apparatus 102. The ROM 402 stores programs such as a boot program. The RAM 403 is used as a work area of the CPU 401. The magnetic disk drive 404, under the control of the CPU 401, controls the reading and writing of data with respect to the magnetic disk 405. The magnetic disk 405 stores data written thereto under the control of the magnetic disk drive 404.

The optical disk drive 406, under the control of the CPU 401, controls the reading and writing of data with respect to the optical disk 407. The optical disk 407 stores data written thereto under the control of the optical disk drive 406, the data stored on the optical disk 407 being read out by a computer.

The display 408 displays, for example, data such as text, images, functional information, etc., in addition to a cursor, icons, and/or tool boxes. A cathode ray tube (CRT), a thin-film-transistor (TFT) liquid crystal display, a plasma display, etc., may be employed as the display 408.

The I/F 409 is connected to the network 240 via a communication line, and is further connected to external apparatuses via the network 240. The I/F 409 administers an internal interface with the network 240, and controls the input and output of data with respect to external apparatuses. For example, a modem or a LAN adaptor may be employed as the I/F 409.

The keyboard 410 includes, for example, keys for inputting letters, numerals, and various instructions and performs the input of data. Alternatively, a touch-panel-type input pad or numeric keypad, etc. may be adopted. The mouse 411 is used to move the cursor, select a region, or move and change the size of windows. A track ball or a joy stick may be adopted provided each respectively has a function similar to a pointing device.

The scanner 412 optically reads an image and takes in the image data into the information providing apparatus 102. The scanner 412 may have an optical character reader (OCR) function as well. The printer 413 prints image data and text data. The printer 413 may be, for example, a laser printer or an ink jet printer.

The configuration of the information providing apparatus 102 may omit the optical disk drive 406, the optical disk 407, the display 408, the keyboard 410, the mouse 411, the scanner 412, and/or the printer 413.

### (Contents of the Various DBs 130, 220, and 230)

The contents of the various DBs 130, 220, and 230 included in the information providing apparatus 102 will be described. The various DBs 130, 220, and 230 are implemented by the storage unit such as the RAM 403, the magnetic disk 405, and the optical disk 407 of the information providing apparatus 102 depicted in FIG. 4, for example.

### <Contents of the Composition DB 130>

FIG. 5 is an explanatory view of an example of the contents of the composition DB 130. In FIG. 5, the composition DB 130 has fields for crop names, growth stages, photographing purposes, and composition images. By setting information in the fields, composition information (e.g., composition information 500-1 to 500-16) is stored as a record for each combination of a crop name and a growth stage.

The crop name is a name of a crop. The crop name represents a type of the crop. The growth stage is information that indicates a growth phase of a crop. For example, the growth stages of paddy rice plants include a planting period, a rooting period, a young ear forming period, an ear emerging period, a grain filling period, a maturing period, a harvesting period, etc. For example, the growth stages of cabbage include a seeding period, a seedling raising period, a transplanting period, a fix planting period, a growing period, a harvesting period, etc.

The photographing purpose represents a purpose of photographing a crop. In other words, the photographing purpose represents an object to be checked on a photographed image, i.e., a photographing object. For example, in the case of paddy rice plants, the planting period for planting young rice plants into a paddy field involves check an interval between lines (rows) of planted young plants (space between rows). Therefore, the photographing purpose of the crop name "paddy rice plant" that is in the growth stage "planting period" is "check space between rows".

The rooting period immediately after the planting involves checking whether a plant has taken root based on whether the thickness of the stem projecting from a water surface reaches a predetermined thickness and checking the leaf color of the young plants. Therefore, the photographing purpose of the crop name "paddy rice plant" that is in the growth stage "rooting period" is "check young plant". In the case of a paddy field with reduced agricultural chemical, the rooting period immediately after the planting involves checking whether the paddy field is in a healthy state based on whether non-biting midge larvae are present. Therefore, the photographing purpose of the crop name "paddy rice plant" that is in the growth stage "rooting period" is "check rice field state".

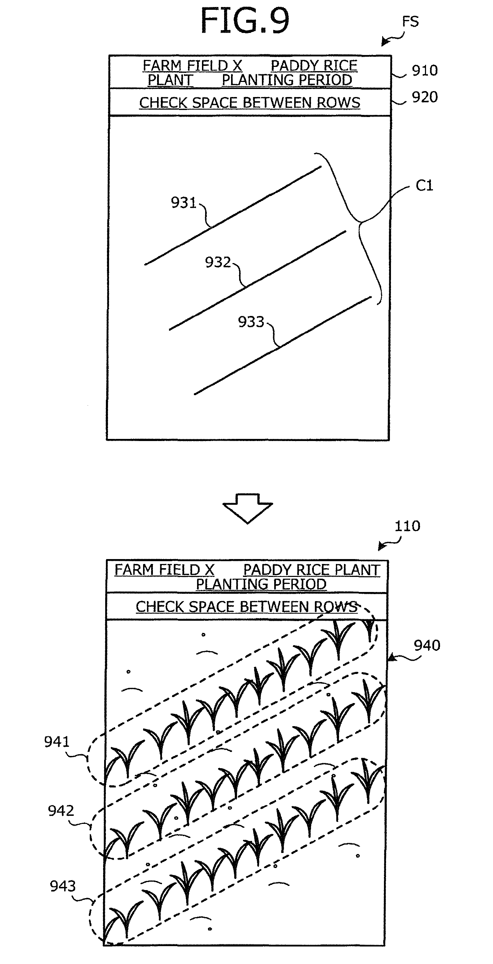

The composition image is image information representative of a photographed image composition at the time of photographing of a crop. The composition represented by the composition image has a role of giving guidance of what should be considered important for photographing to a photographer. A specific example of the composition image will be described later with reference to FIGs. 9 to 12. For example, the composition information 500-1 indicates the photographing purpose "check space between rows" and the composition image "C1" of the crop name "paddy rice plant" in the growth stage "planting period".

The data stored as a composition image is not limited to image information as long as the information indicates a composition. For example, for the purpose of checking pruning in the harvesting period of mandarin oranges, text information or audio information "Please take a photograph such that a pruned end is located at the center of the image" may stored as the information indicative of a composition. As described above, the data may be text information or audio information giving instructions for a composition to a photographer as long as the data includes information on a location to be photographed and information indicative of a position where the location to be photographed should be displayed on the image.

### <Contents of the Farm Field DB 220>

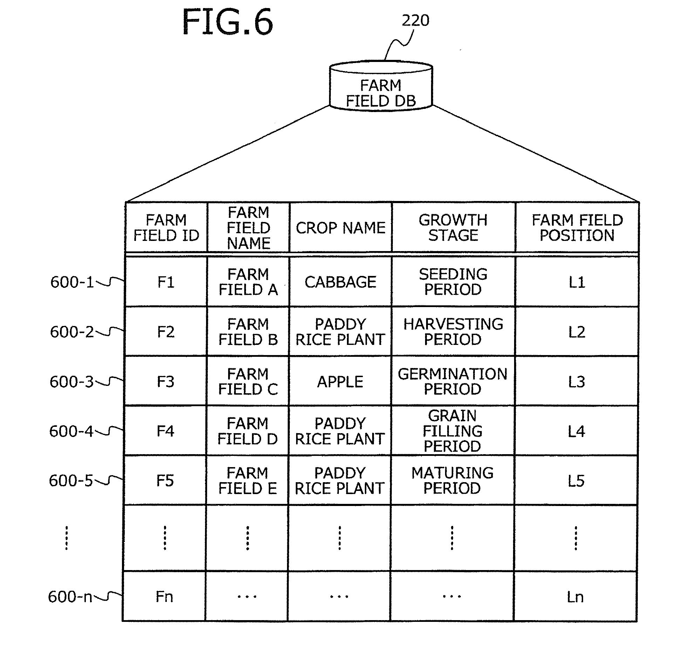

FIG. 6 is an explanatory view of an example of the contents of the farm field DB 220. In FIG. 6, the farm field DB 220 has fields for farm field IDs, farm field names, crop names, growth stages, and farm field positions. By setting information in the fields, farm field information 600-1 to 600-n of farm fields F1 to Fn are stored as records.

The farm field ID is an identifier uniquely identifying the farm fields F1 to Fn scattered in various places. The farm fields F1 to Fn are farm fields managed by a manager of a large-scale farm using the client apparatus 201, for example. An arbitrary farm field among the farm fields F1 to Fn will hereinafter be referred to as a "farm field Fi" (i=1, 2, ..., n).

The farm field name is the name of the farm field Fi. The crop name is the name of a crop cultivated in the farm field Fi. The growth stage is information that indicates the growth phase of a crop cultivated in the farm field Fi. The farm field position is positional information of the farm field Fi. The farm field position is information specifying the center of mass position of the farm field Fi or an area such as a north end position, a west end position, an east end position, and a south end position of the farm field Fi mapped on a map.

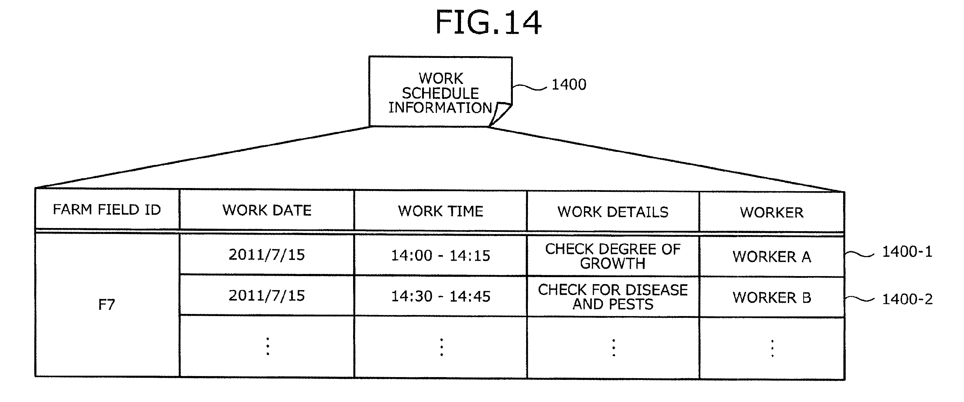

For example, the farm field information 600-1 indicates the farm field name "farm field A", the crop name "cabbage", the growth stage "seeding period", and the farm field position "L1" of the farm field F1. For example, the farm field DB 220 may include work schedule information that indicates a work schedule of farm work performed in the farm field Fi. The work schedule information will be described in detail with reference to FIG. 14.

### <Contents of the Photographed Image DB 230>

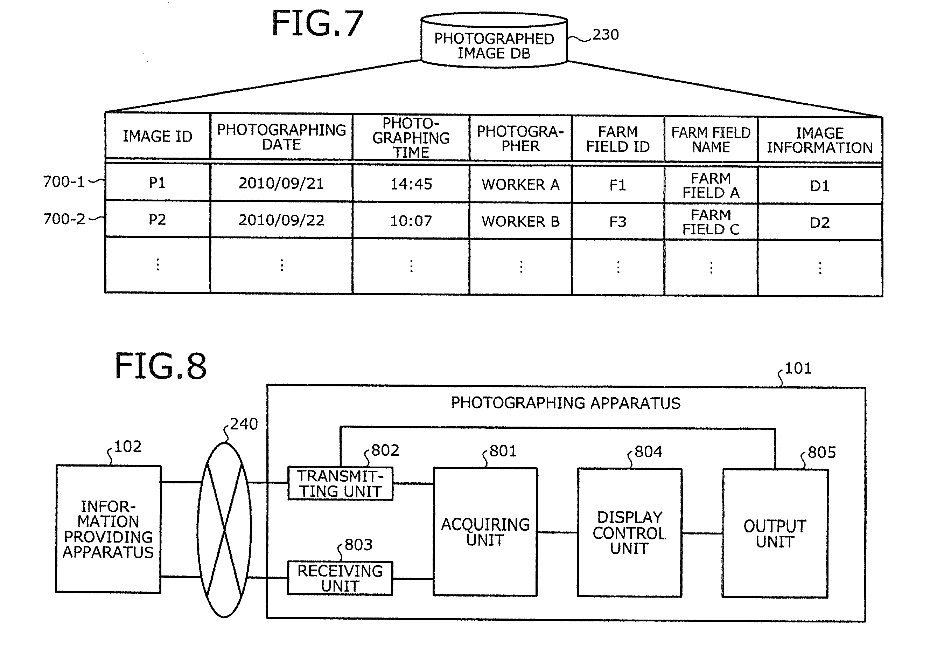

FIG. 7 is an explanatory view of an example of the contents of the photographed image DB 230. In FIG. 7, the photographed image DB 230 has fields for image IDs, photographing dates, photographing times, photographers, farm field IDs, farm field names, and image information. By setting information in the fields, photographing information (e.g., photographing information 700-1, 700-2) is stored as records.

The image ID is an identifier uniquely identifying a photographed image taken by the photographing apparatus 101. The photographing date is the date when the photographed image is taken. The photographing time is the time when the photographed image is taken. The photographer is information, for example, a worker ID, identifying the worker W taking the photographed image. The farm field ID is an identifier of the farm field Fi. The farm field name is a name of the farm field Fi.

The image information is image information of a photographed image taken by the photographing apparatus 101. The image information includes crop information identifying a given crop and photographing purpose information indicating a photographing purpose of photographing the given crop. The crop information and the photographing purpose information will be described in detail later.

For example, the photographing information 700-1 indicates the photographing date "2010/9/21", the photographing time "14:45", the photographer "worker A", the farm field ID "F1", the farm field name "farm field A", and the image information "D1". The photographing information may include positional information (i.e., photographing spot) of the photographing apparatus 101 at the time of photographing of the photographed image.

The contents of the photographed image DB 210 included in the photographing apparatus 101 are the same as the photographed image DB 230 included in the information providing apparatus 102 and therefore, will not be depicted and described. The photographed image DB 210 is implemented by the memory 302 of the photographing apparatus 101 depicted in FIG. 3, for example.

### (Example of Functional Configuration of the Photographing Apparatus 101)

FIG. 8 is a block diagram of a functional configuration of the photographing apparatus 101 according to the first embodiment. In FIG. 8, the photographing apparatus 101 includes an acquiring unit 801, a transmitting unit 802, a receiving unit 803, a display control unit 804, and an output unit 805. The acquiring unit 801 to the output unit 805 are functions acting as a control unit and, for example, are implemented by causing the CPU 301 to execute a program stored in the memory 302 depicted in FIG. 3, or by the I/F 303. The process results of the functional units are stored in the memory 302, for example.

The acquiring unit 801 has a function of acquiring the apparatus information of the photographing apparatus thereof. For example, the apparatus information is information that includes the apparatus ID of the photographing apparatus, the worker ID of the worker W using the photographing apparatus, and the positional information of the photographing apparatus. For example, the apparatus ID of the photographing apparatus and the worker ID of the worker W are stored in the memory 302. For example, the positional information of the photographing apparatus is acquired by the GPS unit 305 depicted in FIG. 3. The positional information of the photographing apparatus may be corrected positional information obtained by correcting the positional information output from the GPS unit 305 by DGPS.

The apparatus information of the photographing apparatus may include information that indicates the farm field name and the farm field ID of the given farm field to be photographed, the crop name and the growth stage of the given crop, the purpose of photographing the given crop, etc. For example, the farm field name and the farm field ID of the given farm field, the crop name and the growth stage of the given crop, and the purpose of photographing the given crop are directly input to the photographing apparatus 101 through operation input by the worker W using the operation buttons 304 depicted in FIG. 3.

The transmitting unit 802 has a function of transmitting the apparatus information to the information providing apparatus 102. For example, when the camera 120 is activated, the transmitting unit 802 transmits the apparatus information through the network 240 to the information providing apparatus 102.

The receiving unit 803 has a function of receiving from the information providing apparatus 102 and consequent to the transmission of the apparatus information of the photographing apparatus to the information providing apparatus 102, a composition image representative of the composition of a photographed image for photographing a given crop that is to be photographed. An arbitrary composition image may hereinafter be referred to as a "composition image C" as a representative of the composition images. For example, the receiving unit 803 receives, through the network 240 and from the information providing apparatus 102, the composition information including the composition image C as the composition information depicted in FIG. 5.

The composition image C is a composition image that corresponds to a combination of a given crop name and a growth stage of the given crop and is among a composition image group stored in the composition DB 130, for example. To the composition information, the farm field ID or the farm field name of the given farm field to be photographed may be added.

The display control unit 804 has a function of displaying on the display 110, the composition image C representative of a photographed image composition for photographing a given crop that is to be photographed. For example, the display control unit 804 superimposes and displays the object and the composition image C on the finder screen of the camera 120. The finder screen is displayed on the display 110, for example.

As a result, the worker W can recognize what composition should be used and what should be considered important for photographing, based on the composition image C displayed on the finder screen. In the following description, the finder screen displayed on the display 110 is referred to as a "finder screen FS".

The display control unit 804 may have a function of displaying crop information that identifies the given crop on the display 110. The crop information is information that supports the photographer. For example, the crop information indicates at least one among the farm field ID, the farm field name of the given farm field, the crop name, and the growth stage of the given crop.

For example, the display control unit 804 displays the composition image C and the crop information along with the object on the finder screen FS. The crop name and the growth stage of the given crop are identified from the composition information including the composition image C, for example. The farm field ID and the farm field name of the given farm field are added to the composition information including the composition image C, for example. The farm field ID, the farm field name of the given farm field, the crop name, and the growth stage of the given crop may be input directly to the photographing apparatus 101 through an input operation by the worker W.

As a result, when the given crop is photographed, the worker W can recognize which crop cultivated in which farm field should be photographed, and can be prevented from photographing another crop different from the targeted crop.

The display control unit 804 may have a function of displaying on the display 110, photographing purpose information that indicates a photographing purpose of photographing the given crop. The photographing purpose information is information for supporting a photographer. For example, the display control unit 804 displays the composition image C, the crop information, and the photographing purpose information along with the object on the finder screen FS. The photographing purpose of photographing the given crop is identified from the composition information including the composition image C, for example. The photographing purpose of photographing the given crop may be input directly to the photographing apparatus 101 through an input operation by the worker W.

As a result, when the given crop is photographed, the worker W can recognize the purpose of photographing the given crop and the worker W can understand the meaning of the composition represented by the composition image C for supporting the capturing of a suitable photographed image. A screen example of the finder image FS will be described later with reference to FIGs. 9 to 12.

The data stored as a composition image is not limited to the composition image and, as described above, may be text information or audio information, which is information that indicates the composition. If the information indicative of a composition stored in the composition DB 130 is text information and the photographing apparatus 101 has a second display unit acting as a finder screen other than the display 110, the display control unit 804 may set the output destination of the text information to the second display unit. If the information that indicates the composition is audio information, the display control unit 804 may obviously have a function of outputting the information to an audio output unit included in the photographing apparatus 101.

The output unit 805 has a function of outputting a photographed image taken by the camera 120. The output format includes, for example, display on the display 110, and transmission through the I/F 303 to an external apparatus, such as the information providing apparatus 102 and the client apparatus 201.

For example, the output unit 805 may transmit to the information providing apparatus 102, the photographing information that correlates and indicates a photographed image, photographing date and time, a worker ID, given farm field information, and given crop information. The worker ID is an identifier of the worker W (photographer) using the photographing apparatus 101. The given farm field information is a farm field ID and a farm field name of the given farm field, for example. The given crop information is a crop name, a growth state, and a photographing purpose of the given crop, for example.

The output unit 805 may record into the photographed image DB 210, the photographing information, which indicates the photographed image, the photographing date and time, the worker ID, the given farm field information, and the given crop information in a correlated manner. The farm field ID or the farm field name of the given farm field is added to the composition information, which includes the composition image C, for example.

Multiple composition images may exist that correspond to a combination of the crop name of and a growth stage of the given crop. For example, the composition images corresponding to the combination of the crop name "paddy rice plant" and the growth stage "rooting period" include a composition image C2 and a composition image C3 (see FIG. 5). Therefore, the receiving unit 803 may receive from the information providing apparatus 102, the composition images representative of photographed image compositions for photographing the given crop.

In the following description, multiple composition images corresponding to a combination of the crop name of and a growth stage of the given crop are referred to as "composition images C[1] to C[K]" (K: a natural number of 1 or greater). An arbitrary composition image of the composition images C[1] to C[K] is referred to as a "composition image C[k]" (k=1, 2, ..., K).

In this case, the display control unit 804 may select any composition image C[k] among the composition images C[1] to C[K]. The display control unit 804 may superimpose and display the selected composition image C[k] and the object on the finder screen FS.

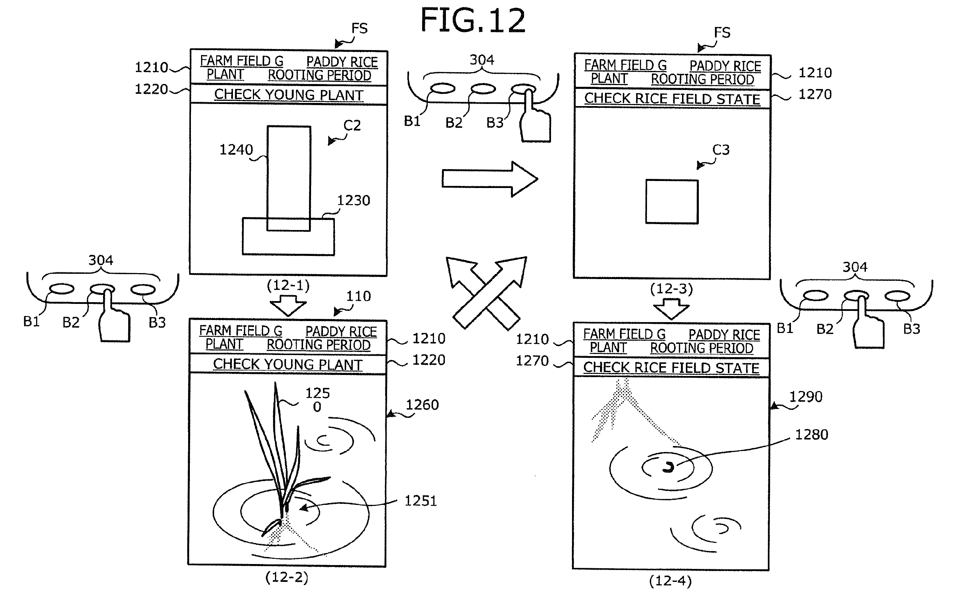

For example, the display control unit 804 may select the composition image C[k] from among the composition images C[1] to C[K], according to an input operation of the operation buttons 304 depicted in FIG. 3 by the worker W. An example of an operation performed by the worker W to select the composition image C[k] will be described later with reference to FIG. 12.

If a photographed image is taken by the camera 120 consequent to a display of the composition image C[k] on the finder screen FS, the display control unit 804 may select an unselected composition image from among the composition images C[1] to C[K] in each case. As a result, each time a photographed image is taken by the camera 120, the composition image C[k] displayed on the finder screen FS can be changed sequentially to take photographed images in series using the compositions represented by the respective composition images C[k].

### (Screen Example of the Finder Screen FS)

A screen example of the finder screen FS will be described. The finder screen FS of the following description is displayed on the display 110 when the camera 120 is activated, for example. The worker W photographs the given crop such that the photographed image is of the composition represented by the composition image C displayed on the finder screen FS.

### <Screen Example 1>

FIG. 9 is an explanatory view (part one) of a screen example of the finder screen FS. In FIG. 9, the finder screen FS displays crop information 910, photographing purpose information 920, and a composition image C1. The crop information 910 indicates the farm field name "farm field X" of a given farm field, the crop name "paddy rice plant" and the growth stage "planting period" of a given crop. The photographing purpose information 920 indicates the photographing purpose of photographing the given crop as "check space between rows".

The composition image C1 is a composition image corresponding to the combination of the crop name "paddy rice plant" and the growth stage "planting period" of the given crop. Therefore, the composition image C1 represents a photographed image composition to be recommended to the photographer when paddy rice plants in the planting period are photographed. For example, the composition image C1 indicates three parallel line segments 931 to 933. The line segments 931 to 933 represent rows (lines) of planted young plants. An interval between the line segments represents a space between rows.

The crop information 910 on the finder screen FS enables the worker W to confirm that the paddy rice plants that are in the planting period and cultivated in the farm field X are photographed, and can prevent the worker W from photographing another crop different from the intended given crop.

The photographing purpose information 920 on the finder screen FS enables the worker W to confirm that the given crop is photographed for checking the space between the rows, and enables the worker W to understand the meaning of the composition represented by the composition image C1 for supporting the photographing of a suitable photographed image.

The composition image C1 of the finder screen FS enables the worker W to determine which composition should be used and what should be considered important for photographing. For example, the worker W can determine that a photograph should be taken using a composition with rows of actually planted young plants and the line segments 931 to 933 arranged in parallel so as to confirm proper planting of the young plants without disorder in the rows (lines).

In the example of FIG. 9, a photographed image 940 of rows 941 to 943 of young paddy rice plants planted in the farm field X is photographed. The worker W can easily take the photographed image 940 as depicted, by adjusting a position and a direction of the camera 120 for photographing such that the young plant rows to be the object overlap the line segments 931 to 933 on the finder screen FS. With the photographed image 940, it can be confirmed that the young plants are properly planted in the farm field X without disorder in the rows 941 to 943.

### <Screen Example 2>

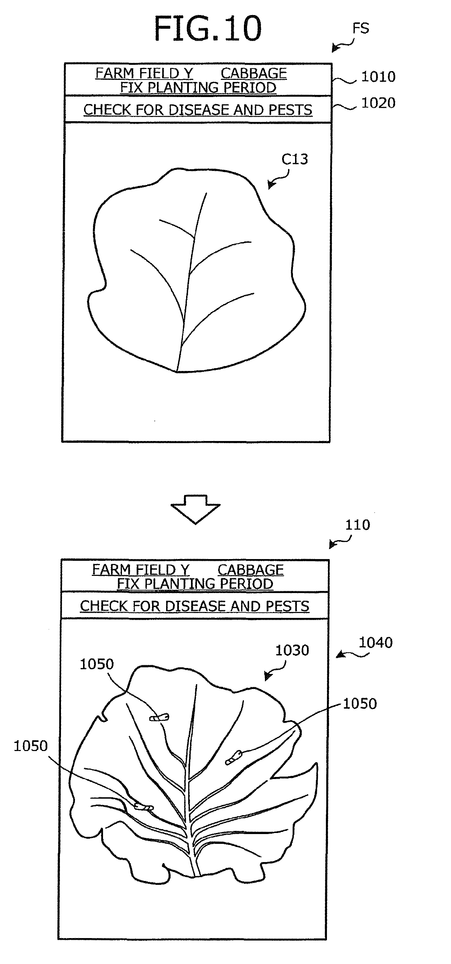

FIG. 10 is an explanatory view (part two) of a screen example of the finder screen FS. In FIG. 10, the finder screen FS displays crop information 1010, photographing purpose information 1020, and a composition image C13. The crop information 1010 indicates the farm field name "farm field Y" of a given farm field, the crop name "cabbage" and the growth stage "fix planting period" of a given crop. The photographing purpose information 1020 indicates the photographing purpose of photographing the given crop as "checking for disease and pests".

The composition image C13 is a composition image that corresponds to the combination of the crop name "cabbage" and the growth stage "fix planting period" of the given crop. For the composition image corresponding to the combination of the crop name "cabbage" and the growth stage "fix planting period", different composition images exist depending on whether the photographing purpose is "check degree of growth" or "checking for disease and pests". In this example, the composition image C13 is registered for the photographing purpose of "checking for disease and pests". Therefore, the composition image C13 represents a photographed image composition to be recommended to the photographer when cabbage in the fix planting period is photographed for the purpose of checking for disease and pests. For example, the composition image C13 represents a graphic imitating a shape of a leaf of cabbage.

The crop information 1010 of the finder screen FS enables the worker W to confirm that the cabbage, which is in the fix planting period and cultivated in the farm field Y, is to be photographed, and can prevent the worker W from photographing another crop different from the given crop.

The photographing purpose information 1020 of the finder screen FS enables the worker W to confirm that the given crop is to be photographed to check for disease and pests, and enables the worker W to understand the meaning of the composition represented by the composition image C13 for supporting the photographing of a proper photographed image.

The composition image C13 of the finder screen FS enables the worker W to determine which composition should be used and what should be considered important for photographing. For example, the worker W can determine that a photograph should be taken in a composition with an entire leaf of cabbage displayed so as to check whether the leaf of cabbage is infested with pests such as cabbageworms.

In the example of FIG. 10, a photographed image 1040 of a leaf 1030 of cabbage planted in the farm field Y is photographed. With the photographed image 1040, it can be confirmed that the leaf 1030 of cabbage planted in the farm field Y is infested by cabbageworms 1050.

For the composition image C13 for checking disease and pest of cabbage, for example, a line segment vertically dividing the finder screen FS in two may be displayed to use a composition image for photographing healthy cabbage on the left side and sick cabbage on the right side. As a result, a photographed image can be taken that facilitates comparison between the healthy cabbage and the sick cabbage cultivated in the same farm field.

### <Screen Example 3>

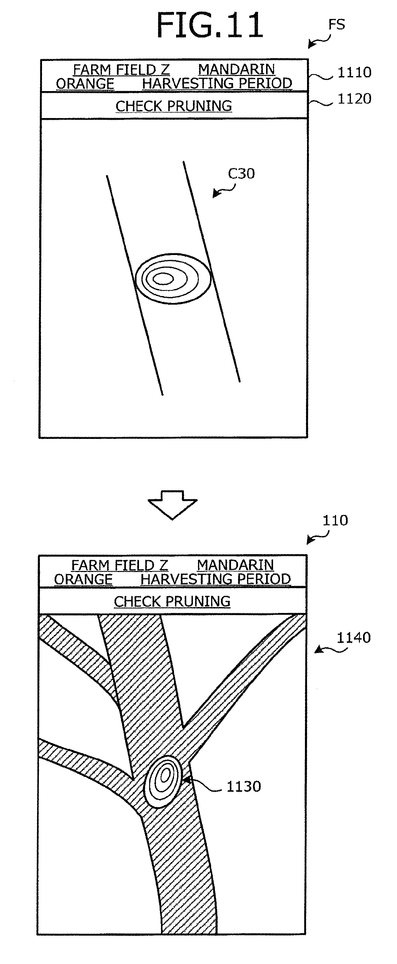

FIG. 11 is an explanatory view (part three) of a screen example of the finder screen FS. In FIG. 11, the finder screen FS displays crop information 1110, photographing purpose information 1120, and a composition image C30. The crop information 1110 indicates the farm field name "farm field Z" of the given farm field, the crop name "mandarin orange" and the growth stage "harvesting period" of the given crop. The photographing purpose information 1120 indicates the photographing purpose of photographing the objet crop as "check pruning".

The composition image C30 is a composition image that corresponds to the combination of the crop name "mandarin orange" and the growth stage "harvesting period" of the given crop. Therefore, the composition image C30 represents a photographed image composition to be recommended to a photographer when a mandarin orange that is in the harvesting period is photographed. For example, the composition image C30 represents a graphic imitating a shape of a cross section of a pruned branch.

The crop information 1110 of the finder screen FS enables the worker W to confirm that the mandarin in the harvesting period cultivated in the farm field Z is photographed, and can prevent the worker W from photographing another crop different from the given crop.

The photographing purpose information 1120 of the finder screen FS enables the worker W to confirm that the given crop is photographed for checking the pruning, and enables the worker W to understand the meaning of the composition represented by the composition image C30 for supporting the photographing of a proper photographed image.

The composition image C30 of the finder screen FS enables the worker W to determine what composition should be used and what should be considered important for photographing. For example, the worker W can determine that a photograph should be taken using a composition with a cross section of a pruned branch of a mandarin orange tree displayed at the center so as to check the cross section of the pruned branch of the mandarin orange tree.

In the example of FIG. 11, a photographed image 1140 of a cross section 1130 of a branch of mandarin orange tree planted in the farm field Z is photographed. With the photographed image 1140, the state of the pruned branch of the mandarin orange tree planted in the farm field Z can be checked.

### <Screen Example 4>

Description will be made of a screen example of the finder screen FS when multiple composition images exist that correspond to a combination of the crop name of and a growth stage of the given crop.

FIG. 12 is an explanatory view (part four) of a screen example of the finder screen FS. In (12-1) of FIG. 12, the finder screen FS displays crop information 1210, photographing purpose information 1220, and a composition image C2. The crop information 1210 indicates the farm field name "farm field G" of the given farm field, the crop name "paddy rice plant" and the growth stage "rooting period" of the given crop. The photographing purpose information 1220 indicates the photographing purpose of photographing the given crop as "check young plant".

The composition image C2 is a composition image that corresponds to the combination of the crop name "paddy rice plant", the growth stage "rooting period", and the photographing purpose "check young plant" of the given crop. Therefore, the composition image C2 represents a photographed image composition to be recommended to a photographer when a paddy rice plant that is in the rooting period is photographed for the purpose of checking the young plant. For example, the composition image C2 is a combination of a horizontally long rectangular graphic 1230 and a vertically long rectangular graphic 1240. The graphic 1230 is a frame for capturing a base of a young plant. The graphic 1240 is a frame for capturing the entire young plant.

The crop information 1210 of the finder screen FS enables the worker W to confirm that a paddy rice plant that is in the rooting period and cultivated in the farm field G is to be photographed, and can prevent the worker W from photographing another crop different from the given crop.

The photographing purpose information 1220 of the finder screen FS enables the worker W to confirm that the given crop is to be photographed to check the young plant, and enables the worker W to understand the meaning of the composition represented by the composition image C2 for supporting the photographing of a suitable photographed image.

The composition image C2 of the finder screen FS enables the worker W to determine what composition should be used and what should be considered important for photographing. For example, the worker W can determine that a photograph should be taken using a composition with the base of a young plant and the entire young plant displayed so as to check whether the young plant has steadily taken root and to check the leaf color of the young plant.

As depicted in FIG. 5, the composition image C3 exists in addition to the composition image C2 as a composition image corresponding to the combination of the crop name "paddy rice plant" and the growth stage "rooting period" of the given crop. During the finder screen FS of (12-1) displaying the composition C2 depicted in FIG. 12, if a button B2 serving as a shutter button among the operation buttons 304 is pressed, a photographed image 1260 is taken by the camera 120.

In the example of (12-2) depicted in FIG. 12, the photographed image 1260 of an entire young plant 1250 planted in the farm field G is photographed including a base 1251. With the photographed image 1260, it can be checked whether the young plant 1250 planted in the farm field G has steadily taken root, and the color of the entire leaves of the young plant 1250 can be checked.

When the photographed image 1260 is taken by the camera 120, the display contents on the finder screen FS are switched to the finder screen FS of (12-3) displaying the composition image C3 depicted in FIG. 12. Alternatively, during the finder screen FS of (12-1) depicted in FIG. 12, if a button B3 is pressed that specifies switching of display to the next composition image, the finder screen FS of (12-3) depicted in FIG. 12 is displayed.

In (12-3) depicted in FIG. 12, the finder screen FS displays the crop information 1210, photographing purpose information 1270, and the composition image C3. The crop information 1210 indicates the farm field name "farm field G" of the given farm field, the crop name "paddy rice plant" and the growth stage "rooting period" of the given crop. The photographing purpose information 1270 indicates the photographing purpose of photographing the given crop as "check rice field state".

The composition image C3 is a composition image corresponding to the combination of the crop name "paddy rice plant", the growth stage "rooting period", and the photographing purpose "check rice field state" of the given crop. Therefore, the composition image C3 represents a photographed image composition to be recommended to a photographer when a paddy rice plant in the rooting period is photographed. For example, the composition image C3 represents a frame for capturing non-biting midge larvae in a paddy field.

The crop information 1210 of the finder screen FS enables the worker W to confirm that a paddy rice plant that is in the rooting period and cultivated in the farm field G is to be photographed, and can prevent the worker W from photographing another crop different from the given crop.

The photographing purpose information 1270 of the finder screen FS enables the worker W to confirm that the given crop is photographed to check the rice field state, and enables the worker W to understand the meaning of the composition represented by the composition image C3 for supporting the photographing of a proper photographed image.

The composition image C3 of the finder screen FS enables the worker W to determine what composition should be used and what should be considered important for photographing. For example, the worker W can determine that a photograph should be taken using a composition with non-biting midge larvae displayed at the center of the screen if non-biting midge larvae are present in the paddy field, so as to confirm the non-biting midge larvae.

During the finder screen FS of (12-3) depicted in FIG. 12, if the button B2 serving as the shutter button is pressed, a photographed image 1290 is taken by the camera 120.

In the example of (12-4) depicted in FIG. 12, the photographed image 1290 of a non-biting midge larva 1280 that is in the farm field G is photographed. With the photographed image 1290, it can be confirmed that the non-biting midge larvae 1280 are present in the farm field G and that the farm field G is in a healthy state.

During the finder screen FS of (12-3) depicted in FIG. 12, if a button B1 is pressed that specifies switching of display to the previously displayed composition image, the finder screen FS of (12-1) depicted in FIG. 12 is displayed.

### (Example of Functional Configuration of the Information Providing Apparatus 102)

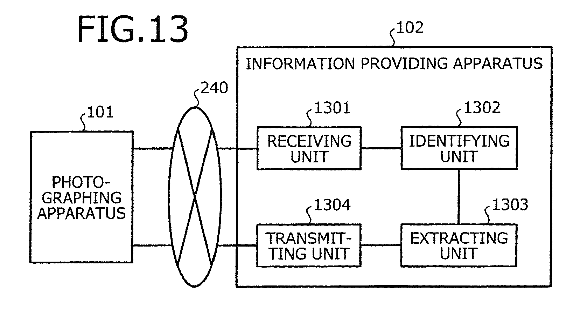

An example of a functional configuration of the information providing apparatus 102 according to the first embodiment will be described. FIG. 13 is a block diagram of a functional configuration of the information providing apparatus 102 according to the first embodiment. In FIG. 13, the information providing apparatus 102 includes a receiving unit 1301, an identifying unit 1302, an extracting unit 1303, and a transmitting unit 1304. The receiving unit 1301 to the transmitting unit 1304 are functions acting as a control unit and, for example, are implemented by causing the CPU 401 to execute a program stored in a storage device such as the ROM 402, the RAM 403, the magnetic disk 405, and the optical disk 407 depicted in FIG. 4 or by the I/F 409. The process results of the functional units are stored in the storage device such as the RAM 403, the magnetic disk 405, and the optical disk 407, for example.

The receiving unit 1301 has a function of receiving the apparatus information of the photographing apparatus 101 from the photographing apparatus 101. As described above, for example, the apparatus information of the photographing apparatus 101 includes at least one among the apparatus ID, the worker ID, the farm field name, the farm field ID, the crop name, the growth stage, and the positional information of the photographing apparatus 101.

The identifying unit 1302 has a function of identifying based on the received apparatus information of the photographing apparatus 101, the farm field Fi to be photographed by the photographing apparatus 101 among the farm fields F1 to Fn. It is assumed that the apparatus information of the photographing apparatus 101 includes the farm field ID. In this case, for example, the identifying unit 1302 identifies among the farm fields F1 to Fn, the farm field Fi corresponding to the farm field ID included in the apparatus information of the photographing apparatus 101.

It is assumed that the apparatus information of the photographing apparatus 101 includes the positional information of the photographing apparatus 101. In this case, for example, the identifying unit 1302 identifies the farm field Fi among the farm fields F1 to Fn, based on the positional information of the photographing apparatus 101 and the farm field positions L1 to Ln of the farm field information 600-1 to 600-n in the farm field DB 220 depicted in FIG. 6.

In particular, for example, it is assumed that the farm field positions of the farm field information 600-1 to 600-n are the center of mass positions of the farm fields F1 to Fn. In this case, for example, the identifying unit 1302 may identify the farm field Fi located closest to the photographing apparatus 101 among the farm fields F1 to Fn. Alternatively, it is assumed that the farm field positions indicated by the farm field information 600-1 to 600-n are information identifying the areas of the farm fields F1 to Fn. In this case, for example, the identifying unit 1302 may identify among the farm fields F1 to Fn, the farm field Fi that includes the position indicated by the positional information of the photographing apparatus 101. If no farm field that includes the position indicated by the positional information of the photographing apparatus 101 is identified, the identifying unit 1302 may identify the farm field Fi located closest to the photographing apparatus 101 among the farm fields F1 to Fn.

The extracting unit 1303 has a function of extracting from the composition DB 130, a composition image indicative of a photographed image for photographing the crop cultivated in the identified farm field Fi. For example, the extracting unit 1303 extracts from the farm field DB 220, farm field information 600-i of the identified farm field Fi.

The extracting unit 1303 then refers to the extracted farm field information 600-i to identify a combination of the crop name cultivated in the farm field Fi and the growth stage. The extracting unit 1303 extracts from the composition DB 130, the composition information that corresponds to the identified combination of the crop name and the growth stage.

For example, when a combination of the crop name and the growth stage is "paddy rice plant/planting period", the extracting unit 1303 extracts the composition information 500-1 from the composition DB 130. When a combination of the crop name and the growth stage is "paddy rice plant/rooting period", the extracting unit 1303 extracts the composition information 500-2, 500-3 from the composition DB 130.

As a result, the composition information can be extracted that includes the composition image C representative of a photographed image composition for photographing a crop that is cultivated in the given farm field and that is to be photographed by the photographing apparatus 101. By extracting the composition information that corresponds to a combination of the crop name and the growth stage, the composition image C that corresponds to the growth stage of the crop can be identified.

The apparatus information of the photographing apparatus 101 may include information indicative of a crop name of a given crop, a growth stage, and a photographing purpose of photographing the given crop. In this case, the identifying unit 1302 may extract from the composition DB 130, the composition information that corresponds to the combination of the crop name, the growth stage, and the photographing purpose included in the apparatus information of the photographing apparatus 101.

The transmitting unit 1304 has a function of transmitting the extracted composition information to the photographing apparatus 101 that is the transmission source of the apparatus information. For example, the transmitting unit 1304 may add the farm field ID or the farm field name of the farm field Fi to be photographed to the extracted composition information for the transmission to the photographing apparatus 101.

As a result, the photographing apparatus 101 can be provided composition information that includes the composition image C representative of a photographed image composition for photographing a crop cultivated in the given farm field to be photographed.

The receiving unit 1301 has a function of receiving from the photographing apparatus 101, the photographing information that includes the photographed image taken by the photographing apparatus 101. As described above, the photographing information is information representative of the photographed image, the photographing date and time, the worker ID, and the farm field ID in a correlated manner, for example. The received photographing information is recorded in the photographed image DB 230 depicted in FIG. 7, for example.

The identifying unit 1302 may identify a photographing purpose of photographing the crop cultivated in the farm field Fi, based on work schedule information indicative of a work schedule of farm work performed in the farm field Fi to be photographed. A specific example of the work schedule information will be described.

FIG. 14 is an explanatory view of a specific example of the work schedule information. In FIG. 14, work schedule information 1400 has fields for farm field IDs, work dates, work times, work details, and workers. By setting information in the fields, work information (e.g., work information 1400-1, 1400-2) is stored as records.

The farm field ID is an identifier uniquely identifying a farm field Fi. The work date is a work scheduled date (year/month/day) on which farm work is performed in the farm field Fi. The work time is a period from the scheduled start time to the scheduled end time of the farm work performed in the farm field Fi. The work details are details of the farm work performed in the farm field Fi. The work details include, for example, checking the space between rows, checking the rooting, checking the rice field state, checking the degree of growth, and checking for disease and pests. In other words, the work details correspond to the photographing purpose of photographing the crop cultivated in the farm field Fi. The worker is an identifier uniquely identifying a worker that performs the farm work carried out in the farm field Fi, i.e., a worker ID.

It is assumed that the farm field Fi to be photographed is a "farm field F7" and that the worker W using the photographing apparatus 101 is a "worker B". The worker W is identified from the worker ID included in the apparatus information of the photographing apparatus 101, for example. In this case, the identifying unit 1302 extracts from the work schedule information 1400, the work information 1400-2 that corresponds to the worker B. The identifying unit 1302 identifies the work details "checking for disease and pests" identified from the work information 1400-2 as the photographing purpose of photographing the crop cultivated in the farm field F7.

Although the work information corresponding to the worker ID is extracted from the work schedule information 1400 in the description, for example, the identifying unit 1302 may extract work information that corresponds to a work time including the reception time of the apparatus information of the photographing apparatus 101.

Reference of the description returns to FIG. 13. The extracting unit 1303 may extract from the composition DB 130 and based on the identified photographing purpose, the composition image representative of a photographed image composition for photographing a crop cultivated in the farm field Fi. For example, first, the extracting unit 1303 extracts from the farm field DB 220, the farm field information 600-i of the identified farm field Fi.

The extracting unit 1303 refers to the extracted farm field information 600-i to identify a combination of the crop name of a crop cultivated in the farm field Fi and the growth stage of the crop. The extracting unit 1303 extracts from the composition DB 130, the composition information that corresponds to the combination of the identified crop name and growth stage, and the photographing purpose identified by the identifying unit 1302.

For example, when the combination of the crop name, the growth stage, and the photographing purpose is "cabbage/fix planting period/check degree of growth", the extracting unit 1303 extracts the composition information 500-12 from the composition DB 130. When the combination of the crop name, the growth stage, and the photographing purpose is "cabbage/fix planting period/checking for disease and pests", the extracting unit 1303 extracts the composition information 500-13 from the composition DB 130.

As a result, the composition information that corresponds to the combination of the crop name, the growth stage, and the photographing purpose can be extracted to identify the composition image C that corresponds to the growth stage and the photographing purpose of the crop.

The identifying unit 1302 may identify among the farm fields F1 to Fn, the farm field Fi to be photographed by the photographing apparatus 101, based on, for example, the work schedule information indicative of a work schedule of farm work performed in each of the farm fields F1 to Fn such as the work schedule information 1400. For example, the identifying unit 1302 identifies the work schedule information in which the worker ID included in the apparatus information of the photographing apparatus 101 is set in the worker field, among the work schedule information indicative of a work schedule of farm work performed in each of the farm fields F1 to Fn.

The identifying unit 1302 then identifies work information in which the reception time of the apparatus information of the photographing apparatus 101 is included in the work time set in the work time field, among the identified work schedule information. The identifying unit 1302 identifies, as the farm field Fi, the farm field that corresponds to the farm field ID set in the farm field ID field of the identified work information to be photographed by the photographing apparatus 101.

### (Patrolling Result List Screen 1500)

A screen example of a patrolling result list screen 1500 will be described that is displayed on the display 408 of the client apparatus 201. The patrolling result list screen 1500 is information provided, i.e., output, from the information providing apparatus 102 to the client apparatus 201 in response to a browsing request from the client apparatus 201, for example.

The browsing request includes information identifying a photographed image to be viewed, such as the photographing date and time, the farm field ID, the farm field name, the worker ID, the crop name, the growth stage, and the photographing purpose, for example. The information providing apparatus 102 extracts from the photographed image DB 230, for example, the photographed images to be viewed, creates and output the patrolling result list screen 1500 to the client apparatus 201.

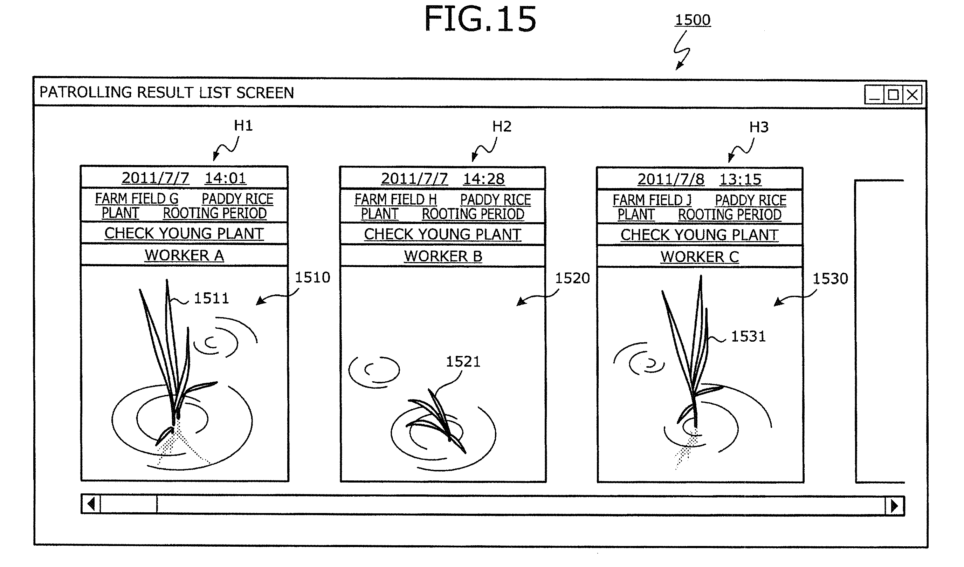

FIG. 15 is an explanatory view of a screen example of the patrolling result list screen 1500. In FIG. 15, the patrolling result list screen 1500 displays display data H1 to H3.

The display data H1 is display data of a photographed image 1510. The display data H1 indicates the photographing date and time "2011/7/7 14:01" of the photographed image 1510, the farm field name "farm field G" of the given farm field, the crop name "paddy rice plant" of the given crop, and the growth stage "rooting period". The display data H1 also indicates the photographing purpose "check young plant" and the photographer "worker A" of the photographed image 1510.

From the display data H1, for example, a manager of a farm, i.e., a checker, can confirm that a young plant 1511 cultivated in the farm field G has steadily taken root, and can confirm the color of leaves of the entire young plant 1511.

The display data H2 is display data of a photographed image 1520. The display data H2 indicates the photographing date and time "2011/7/7 14:28" of the photographed image 1520, the farm field name "farm field H" of the given farm field, the crop name "paddy rice plant" of the given crop, and the growth stage "rooting period". The display data H2 also indicates the photographing purpose "check young plant" and the photographer "worker B" of the photographed image 1520.

From the display data H2, for example, the manager of the farm, i.e., the checker, can confirm that a young plant 1521 cultivated in the farm field H has not steadily taken root, and can confirm the color of leaves of the entire young plant 1521.

The display data H3 is display data of a photographed image 1530. The display data H3 indicates the photographing date and time "2011/7/8 13:15" of the photographed image 1530, the farm field name "farm field J" of the given farm field, the crop name "paddy rice plant" of the given crop, and the growth stage "rooting period". The display data H3 also indicates the photographing purpose "check young plant" and the photographer "worker C" of the photographed image 1530.

From the display data H3, for example, the manager of the farm, i.e., the checker, can confirm that a young plant 1531 cultivated in the farm field J has steadily taken root, and can confirm the color of leaves of the entire young plant 1531.

Each of the photographed images 1510, 1520, and 1530 of the given crop with the same crop name and the same growth stage is photographed using the same composition. Therefore, the patrolling result list screen 1500 displaying a list of such images allows the checker to easily determine and compare locations using the photographed images to be checked and can increase the work efficiency when the degree of rooting and the color of leaves of young plants are checked. The photographed images taken using the same compositions provide information of high utility value when the photographed images of the given crop with the same crop name and the same growth stage are subjected to an image process for analysis. The patrolling result list screen 1500 may be displayed on the display 408 of the information providing apparatus 102.

### (Photographing Support Process Procedure of the Photographing Apparatus 101)

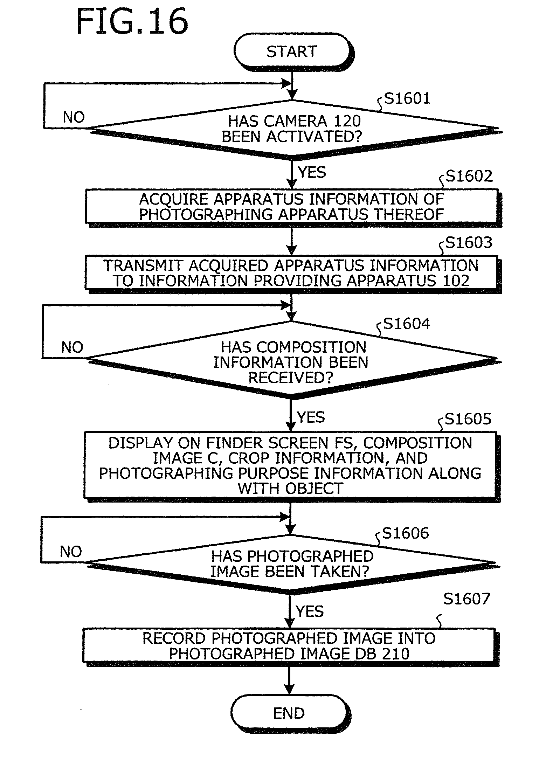

A photographing support process procedure of the photographing apparatus 101 according to the first embodiment will be described. FIG. 16 is a flowchart (part one) of an example of the photographing support process procedure of the photographing apparatus 101 according to the first embodiment. In the flowchart of FIG. 16, first, the photographing apparatus 101 determines whether the camera 120 has been activated (step S1601).

If not, the photographing apparatus 101 waits until the camera 120 is activated (step S1601: NO). If the camera 120 has been activated (step S1601: YES), the acquiring unit 801 acquires the apparatus information of the photographing apparatus 101 thereof (step S1602). The transmitting unit 802 transmits the acquired apparatus information of the photographing apparatus 101 to the information providing apparatus 102 (step S1603).

The receiving unit 803 determines whether the composition information that includes the composition image C representative of the photographed image composition for photographing a given crop that is to be photographed has been received from the information providing apparatus 102 (step S1604). If not, the receiving unit 803 waits until the composition information is received (step S1604: NO).

If the composition information has been received (step S1604: YES), the display control unit 804 displays the composition image C, the crop information, and the photographing purpose information along with the object on the finder screen FS of the camera 120 (step S1605). The photographing apparatus 101 determines whether a photographed image has been taken by the camera 120 (step S1606).

If not, the photographing apparatus 101 waits until a photographed image is taken (step S1606: NO). If a photographed image has been taken (step S1606: YES), the output unit 805 records the taken photographed image into the photographed image DB 210 (step S1607), and a series of the process of the flowchart is terminated.

As a result, when the given crop is photographed, the photographer can be supported so as to take a photographed image using the composition represented by the composition image C that corresponds to a combination of the crop name and the growth stage of the given crop.

A photographing support process procedure of the photographing apparatus 101 will be described on the assumption that multiple composition images correspond to a combination of the crop name and the growth stage of the given crop.

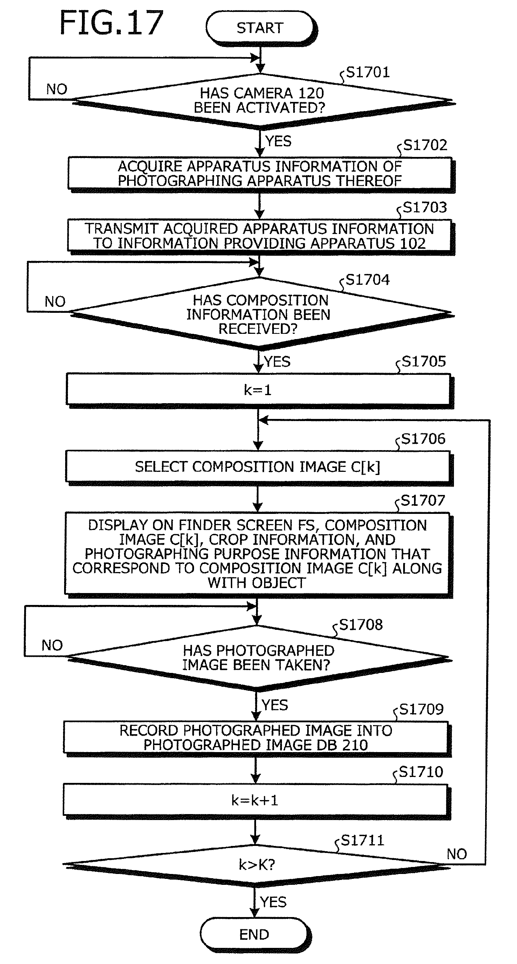

FIG. 17 is a flowchart (part two) of an example of the photographing support process procedure of the photographing apparatus 101 according to the first embodiment. In the flowchart of FIG. 17, first, the photographing apparatus 101 determines whether the camera 120 has been activated (step S1701).

If not, the photographing apparatus 101 waits until the camera 120 is activated (step S1701: NO). If the camera 120 has been activated (step S1701: YES), the acquiring unit 801 acquires the apparatus information of the photographing apparatus 101 thereof (step S1702). The transmitting unit 802 transmits the acquired apparatus information of the photographing apparatus 101 to the information providing apparatus 102 (step S1703).

The receiving unit 803 determines whether the composition information that includes the composition image C representative of the photographed image composition for photographing the given crop that is to be photographed has been received from the information providing apparatus 102 (step S1704). If not, the receiving unit 803 waits until the composition information is received (step S1704: NO).

If the composition information has been received (step S1704: YES), the display control unit 804 sets ""k" of the composition image C[k] to "k=1" (step S1705) and selects the composition image C[k] among the composition images C[1] to C[K] (step S1706).

The display control unit 804 displays the composition image C[k], the crop information, and the photographing purpose information that correspond to the composition image C[k] along with the object on the finder screen FS of the camera 120 (step S1707). The photographing apparatus 101 determines whether a photographed image has been taken by the camera 120 (step S1708).

If not, the photographing apparatus 101 waits until a photographed image is taken (step S1708: NO). If a photographed image has been taken (step S1708: YES), the output unit 805 records the photographed image into the photographed image DB 210 (step S1709).

The display control unit 804 increments "k" of the composition image C[k] (step S1710) and determines whether "k" is larger than "K" (step S1711). If "k" is equal to or less than "K" (step S1711: NO), the procedure returns to step S1706. On the other hand, if "k" is larger than "K" (step S1711: YES), a series of the process of the flowchart is terminated.

As a result, each time a photographed image is taken by the camera 120, the composition image C[k] displayed on the finder screen FS can be sequentially changed to take photographed images in series using the compositions represented by the respective composition images C[k] that correspond to a combination of the crop name and the growth stage of the given crop.

### (Information Providing Process Procedure of the Information Providing Apparatus 102)

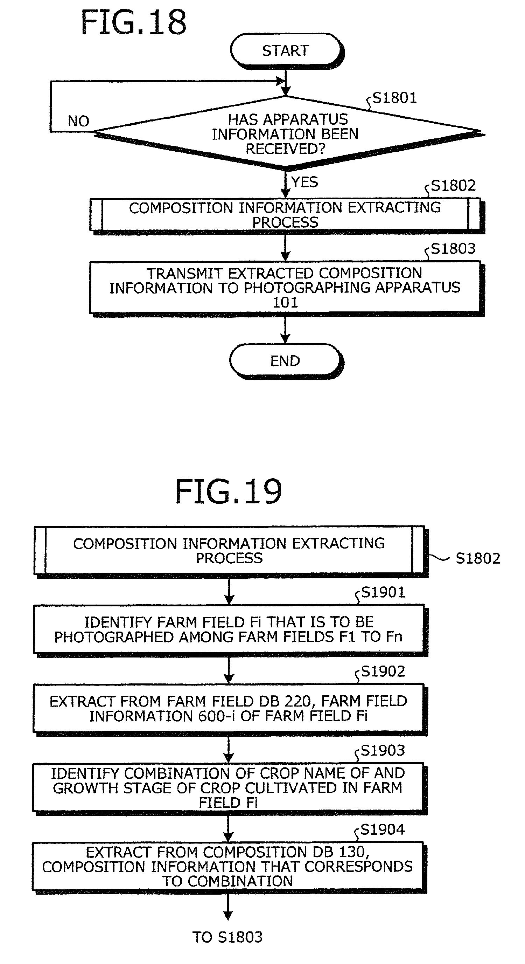

An information providing process procedure of the information providing apparatus 102 according to the first embodiment will be described. FIG. 18 is a flowchart of an example of the information providing process procedure of the information providing apparatus 102 according to the first embodiment. In the flowchart of FIG. 18, first, the receiving unit 1301 determines whether the apparatus information of the photographing apparatus 101 has been received from the photographing apparatus 101 (step S1801).

If not, the receiving unit 1301 waits until the apparatus information of the photographing apparatus 101 is received (step S1801: NO). If the apparatus information of the photographing apparatus 101 has been received (step S1801: YES), the extracting unit 1303 executes a composition information extracting process of extracting the composition information from the composition DB 130 (step S1802).

The transmitting unit 1304 transmits the extracted composition information to the photographing apparatus 101 (step S1803), and a series of the process of the flowchart is terminated. As a result, the photographing apparatus 101 is provided the composition information that includes the composition image C that corresponds to the combination of the crop name and the growth stage of the crop cultivated in the farm field Fi.

A specific process procedure of the composition information extracting process at step S1802 depicted in FIG. 18 will be described.

FIG. 19 is a flowchart of an example of the specific process procedure of the composition information extracting process. In the flowchart of FIG. 19, first, the identifying unit 1302 identifies based on the apparatus information of the photographing apparatus 101, the farm field Fi that is to be photographed by the photographing apparatus 101 among the farm fields F1 to Fn (step S1901).

The extracting unit 1303 extracts from the farm field DB 220, the farm field information 600-i of the identified farm field Fi (step S1902). The extracting unit 1303 identifies from the extracted farm field information 600-i, a combination of the crop name of and the growth stage of a crop cultivated in the farm field Fi (step S1903).

The extracting unit 1303 extracts from the composition DB 130, the composition information that includes the composition image C that corresponds to the identified combination of the crop name and the growth stage (step S1904), and the procedure goes to step S1803 depicted in FIG. 18. As a result, composition information can be extracted that includes the composition image C that corresponds to the combination of the crop name and the growth stage of the crop cultivated in the farm field Fi to be photographed.

As described above, the photographing apparatus 101 according to the first embodiment can superimpose and display the composition image C that corresponds to a combination of the crop name and the growth stage of the given crop on an image related to the object on the finder screen FS of the camera 120 when the given crop is photographed. As a result, at the time of photographing of a crop for which the location to be focused on differs for each combination of the crop name and growth stage, the worker W can easily determine what composition should be used and what should be considered important for photographing so as to collect photographed images facilitating comprehension of the growth state of the crop.

The photographing apparatus 101 according to the first embodiment can display on the finder screen FS of the camera 210, crop information that identifies a given crop (e.g., a farm field ID, a farm field name of the given farm field, and a crop name, a growth stage of the given crop). As a result, when the given crop is photographed, the worker W can check which crop cultivated in which farm field should be photographed, and can be prevented from photographing another crop different from the given crop.

The photographing apparatus 101 according to the first embodiment can display on the finder screen FS of the camera 210, the photographing purpose information indicative of a photographing purpose of photographing the given crop. As a result, when the given crop is photographed, the worker W can recognize for what purpose the given crop is photographed and the worker W can understand the meaning of the composition represented by the composition image C for supporting the photographing of a suitable photographed image.

The information providing apparatus 102 according to the first embodiment can identify among the farm fields F1 to Fn, the farm field Fi to be photographed, based on the apparatus information of the photographing apparatus 101 such as the apparatus ID, the worker ID, the positional information, the farm field ID, the crop name, the growth stage, and the photographing purpose, for example.

The information providing apparatus 102 according to the first embodiment can extract from the composition DB 130, and provide to the photographing apparatus 101, the composition information that corresponds to a combination of the crop name and the growth stage of the crop cultivated in the farm field Fi to be photographed. As a result, the photographing apparatus 101 can identify the composition image C that corresponds to the combination of the crop name and the growth stage of the given crop.

The information providing apparatus 102 according to the first embodiment can extract from the composition DB 130, and provide to the photographing apparatus 101, the composition information corresponding to a combination of the crop name, the growth stage, and the photographing purpose of the crop cultivated in the farm field Fi to be photographed. As a result, the photographing apparatus 101 can identify the composition image C that corresponds to a combination of the crop name, the growth stage, and the photographing purpose of the given crop.

### (Second Embodiment)

The photographing apparatus 101 according to a second embodiment will be described. Although the first embodiment has been described in terms of the interlocked operation of the photographing apparatus 101 and the information providing apparatus 102, the second embodiment will be described in terms of the independent operation of the photographing apparatus 101. Portions identical to those described in the first embodiment are denoted by the same reference numerals used in the first embodiment and will not be described.

### (Functional Configuration Example of the Photographing Apparatus 101)

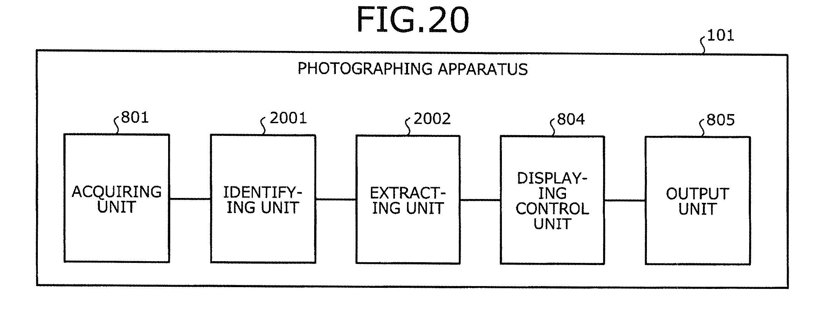

FIG. 20 is a block diagram of a functional configuration of the photographing apparatus 101 according to the second embodiment. In FIG. 20, the photographing apparatus 101 includes the acquiring unit 801, the displaying control unit 804, the output unit 805, an identifying unit 2001, and an extracting unit 2002. The acquiring unit 801, the displaying control unit 804, the output unit 805, the identifying unit 2001, and the extracting unit 2002 are functions acting as a control unit and, for example, are implemented by causing the CPU 301 to execute a program stored in the memory 302 depicted in FIG. 3 or by the I/F 303. The process results of the functional units are stored in the memory 302, for example. The photographing apparatus 101 has the various DBs 130, 220, and 230 depicted in FIGs. 5 to 7.

The identifying unit 2001 has a function of identifying based on the apparatus information of the photographing apparatus 101 thereof acquired by the acquiring unit 801, the farm field Fi that is to be photographed by the photographing apparatus 101 among the farm fields F1 to Fn. Specific process details of the identifying unit 2001 are the same as the identifying unit 1302 of the information providing apparatus 102 depicted in FIG. 13 and therefore, will not be described in detail.

The extracting unit 2002 has a function of extracting the composition image C representative of the photographed image composition for photographing the crop cultivated in the identified farm field Fi. Specific process details of the extracting unit 2002 are the same as the extracting unit 1303 of the information providing apparatus 102 depicted in FIG. 13 and therefore, will not be described in detail.

The display control unit 804 displays on the display 110, the composition image C representative of the photographed image composition for photographing the given crop to be photographed. The composition image C is a composition image that has been extracted from the composition DB 130 by the extracting unit 2002. Specific process details of the display control unit 804 are the same as the process details described in the first example and therefore, will not be described in detail.

### (Photographing Support Process Procedure of the Photographing Apparatus 101)

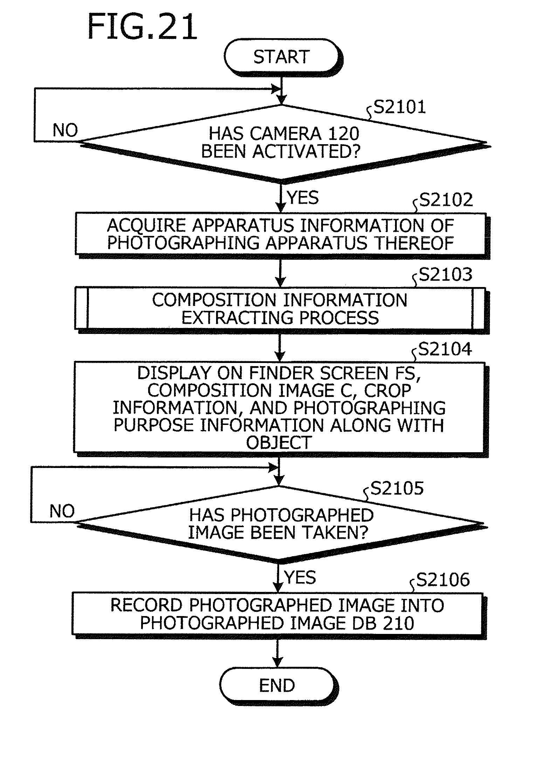

A photographing support process procedure of the photographing apparatus 101 according to the second embodiment will be described. FIG. 21 is a flowchart of an example of the photographing support process procedure of the photographing apparatus 101 according to the second embodiment. In the flowchart of FIG. 21, first, the photographing apparatus 101 determines whether the camera 120 has been activated (step S2101).

If not, the photographing apparatus 101 waits until the camera 120 is activated (step S2101: NO). If the camera 120 has been activated (step S2101: YES), the acquiring unit 801 acquires the apparatus information of the photographing apparatus 101 thereof (step S2102). The extracting unit 2102 executes the composition information extracting process of extracting the composition information from the composition DB 130 (step S2103).

The display control unit 804 displays the composition image C, the crop information, and the photographing purpose information along with the object on the finder screen FS of the camera 120 (step S2104). The photographing apparatus 101 determines whether a photographed image has been taken by the camera 120 (step S2105).

If not, the photographing apparatus 101 waits until a photographed image is taken (step S2105: NO). If a photographed image has been taken (step S2105: YES), the output unit 805 records the photographed image into the photographed image DB 210 (step S2106), and a series of the process of the flowchart is terminated.

As a result, when the given crop is photographed, the photographer can be supported so as to take a photographed image using the composition represented by the composition image C that corresponds to the combination of the crop name and the growth stage of the given crop. A specific process procedure of the composition information extracting process at step S2103 depicted in FIG. 21 is the same as the specific process procedure of the composition information extracting process depicted in FIG. 19 and therefore, will not be described.

In the case of the second embodiment, the patrolling result list screen 1500 may be displayed on the display 110 of the photographing apparatus 101. Alternatively, the information recorded in the photographed image DB 210 may be copied through wireless or wired communication or through a portable storage medium to the information providing apparatus 102 and may be displayed on the display 408 of the information providing apparatus 102.

As described above, the photographing apparatus 101 according to the second embodiment can identify based on the apparatus information of the photographing apparatus 101, the farm field Fi that is to be photographed among the farm fields F1 to Fn. The photographing apparatus 101 can acquire the composition information that corresponds to the combination of the crop name and the growth stage of the crop cultivated in the farm field Fi that is to be photographed.

The photographing support method described in the present embodiment may be implemented by executing a prepared program on a computer such as a personal computer and a workstation. The program is stored on a computer-readable recording medium such as a hard disk, a flexible disk, a CD-ROM, an MO, and a DVD, read out from the computer-readable medium, and executed by the computer. The program may be distributed through a network such as the Internet.

### EXPLANATIONS OF LETTERS OR NUMERALS

- 101: photographing apparatus
- 102: information providing apparatus
- 130: composition DB
- 801: acquiring unit
- 802, 1304: transmitting unit
- 803, 1301: receiving unit
- 804: display control unit
- 805: output unit
- 1302, 2001: identifying unit
- 1303, 2002: extracting unit

## Claims

1. A photographing apparatus comprising:
a display unit;
an acquiring unit that acquires from a storage unit that stores information that indicates a photographed image composition for photographing a crop, information that indicates a composition determined based on information related to a farm field, the storage unit storing a plurality of records of the information for the crop; and
a display control unit that displays on the display unit, the acquired information that indicates the composition.

2. The photographing apparatus according to claim 1, wherein
the storage unit stores for each combination of a type of the crop and a growth stage of the crop, the information that indicates the composition, and
the acquiring unit acquires from the storage unit, the information that indicates the composition that corresponds to a combination of the type of the given crop and the growth stage of the given crop.

3. The photographing apparatus according to claim 2, wherein
the display control unit displays on the display unit, the information that identifies the type of the given crop and the growth stage of the given crop.

4. The photographing apparatus according to any one of claims 1 to 3, wherein
the storage unit stores for each combination of a type of the crop, a growth stage of the crop, and a photographing subject for photographing the crop, the information that indicates the composition, and
the acquiring unit acquires the information that indicates the composition that corresponds to a combination of the type of the given crop, the growth stage of the given crop, and the photographing subject for photographing the given crop.

5. The photographing apparatus according to claim 4, wherein
the display control unit displays on the display unit, the information that identifies the photographing subject for photographing the given crop.

6. The photographing apparatus according to any one of claims 1 to 5, comprising
an identifying unit that identifies a given farm field that is to be photographed among a farm field group; and
an extracting unit that extracts crop information that identifies the type of a crop cultivated in the given farm field, the crop information being extracted from a crop information storage unit that stores for each farm field of the farm field group, crop information that identifies a type of a crop cultivated in the farm field, wherein
the acquiring unit acquires from the storage unit, the information that indicates the composition corresponds to the type of the crop identified from the extracted crop information.

7. The photographing apparatus according to claim 6, wherein
the storage unit stores for each combination of a type of the crop and a growth stage of the crop, the information that indicates the composition,
the crop information storage unit stores for each farm field of the farm field group, the crop information that identifies the type of a crop cultivated in the farm field and a growth stage of the crop, and
the acquiring unit acquires from the storage unit, the information that indicates the composition that corresponds to the combination of the type of the crop and the growth stage of the crop identified from the extracted crop information.

8. The photographing apparatus according to claim 1, wherein
the storage unit and the crop information storage unit are storage units included in the photographing apparatus.

9. The photographing apparatus according to any one of claims 1 to 7, comprising
a transmitting unit that transmits to an information providing apparatus having the storage unit, apparatus information that identifies the photographing apparatus, wherein
the acquiring unit, consequent to transmission of the apparatus information by the transmitting unit, acquires from the information providing apparatus, the information that indicates the composition that corresponds to the type of the crop cultivated in the farm field identified from the apparatus information, the acquired information being among the information that indicates compositions and that is stored in the storage unit.

10. The photographing apparatus according to claim 9, wherein
the storage unit stores for each combination of a type of the crop and a growth stage of the crop, the information that indicates the composition, and
the acquiring unit, consequent to transmission of the apparatus information by the transmitting unit, acquires from the information providing apparatus, the information that indicates the composition that corresponds to a combination of the type of and the growth stage of the crop cultivated in the farm field identified from the apparatus information, the acquired information being among the information that indicates compositions and that is stored in the storage unit.

11. The photographing apparatus according to claim 9 or 10, comprising
a positional information acquiring unit that acquires positional information of the photographing apparatus, wherein
the transmitting unit transmits to the information providing apparatus, the apparatus information including the acquired positional information of the photographing apparatus, and
the acquiring unit, consequent to transmission of the apparatus information by the transmitting unit, acquires from the information providing apparatus, the information that indicates the composition that corresponds to the type of the crop cultivated in the farm field identified from the positional information of the photographing apparatus, the acquired information being among the information that indicates compositions stored in the storage unit.

12. The photographing apparatus according to any one of claims 1 to 11, wherein
the display unit is a display unit that displays an object photographed by a photographing unit that is included in the photographing apparatus, and
the display control unit displays on the display unit, the object together with the information that indicates the composition.

13. A photographing support program that causes a computer to execute:
acquiring from a storage unit that stores information that indicates a photographed image composition for photographing a crop, information that indicates a composition determined based on information related to a farm field, the storage unit storing a plurality of records of the information for the crop; and
displaying on a display unit, the acquired information that indicates the composition.

14. An information providing method executed by a computer, the information providing method comprising:
receiving from a photographing apparatus connected to the computer in a communicable manner, information capable of identifying a farm field that is to be photographed;
extracting from a storage unit that stores information that indicates a photographed image composition for photographing a crop, information that indicates a composition, the information being extracted based on the farm field that is identified based on the received information, and the storage unit storing a plurality of records of the information for the crop; and
transmitting to the photographing apparatus, the extracted information that indicates the composition.

15. The information providing method according to claim 14, wherein
the information received from the photographing apparatus is apparatus information that identifies the photographing apparatus,
the information providing method comprises:
identifying based on the apparatus information, a given farm field that is among a farm field group and that is to be photographed by the photographing apparatus; and
extracting from a crop information storage unit that stores for each farm field of the farm field group, crop information that identifies a type of a crop cultivated in the farm field, crop information that identifies the type of a crop cultivated in the identified given farm field, and
the extracting of the information that indicates the composition includes extracting from the storage unit, the information that indicates the composition that corresponds to the type of the crop identified from the extracted crop information.

16. The information providing method according to claim 15, wherein
the storage unit stores for each combination of the type of the crop and a growth stage of the crop, the information that indicates a photographed image composition for photographing the crop,
the crop information storage unit stores for each farm field of the farm field group, the crop information that identifies the type of the crop cultivated in the farm field and a growth stage of the crop, and
the extracting of the information that indicates the composition includes extracting from the storage unit, the information that indicates the composition that corresponds to a combination of the type of the crop and the growth stage of the crop identified from the extracted crop information.

17. The information providing method according to claim 15 or 16, wherein
the storage unit stores for each combination of the type of the crop, a growth stage of the crop, and a photographing object for photographing the crop, the information that indicates the composition for the combination,
the information providing method comprises identifying the photographing object for photographing the crop cultivated in the given farm field, based on work schedule information that indicates a work schedule of farm work performed in the given farm field, and
the extracting of the information that indicates the composition includes extracting from the storage unit, information that indicates the composition that corresponds to a combination of the identified photographing object, the type of the crop, and the growth stage of the crop identified from the extracted crop information.

18. An information providing program that causes a computer to execute:
receiving from a photographing apparatus, information capable of identifying a farm field that is to be photographed;
extracting from a storage unit that stores information that indicates a photographed image composition for photographing a crop, information that indicates a composition, the information being extracted based on the farm field that is identified based on the received information, and the storage unit storing a plurality of records of the information for the crop; and
transmitting to the photographing apparatus, the extracted information that indicates the composition.
